# FASCICULE DE BREVET EUROPEEN

(11) **EP 1 940 745 B1**
(45) Date de publication et mention de la délivrance du brevet: **28.06.2017**
(21) Numéro de dépôt: 06807486.3
(22) Date de dépôt: 23.10.2006
(51) Int. Cl.: C02F 3/06, C02F 1/52, C02F 1/56, B01D 21/01, B01D 21/06

(54) **PROCEDE ET INSTALLATION POUR LE TRAITEMENT DES EAUX INTEGRANT UN TRAITEMENT BIOLOGIQUE A BACTERIES FIXEES ET UNE FLOCULATION-DECANTATION**
WASSERBEHANDLUNGSVERFAHREN UND -ANORDNUNG MIT INTEGRIERTER BIOLOGISCHER BEHANDLUNG MIT FIXIERTEN BAKTERIEN UND FLOCKUNG/DEKANTIERUNG
WATER TREATING METHOD AND ARRANGEMENT INTEGRATING A FIXED-BACTERIA BIOLOGICAL TREATMENT AND FLOCCULATION-DECANTATION

(30) Priorité: 28.10.2005 FR 0511084; 17.11.2005 FR 0511669
(43) Date de publication de la demande: 09.07.2008
(73) Titulaire: Veolia Water Solutions & Technologies Support, 94410 Saint-Maurice (FR)
(72) Inventeur: SAUVIGNET, Philippe, 35460 Saint-Etienne-en-Cogles (FR); BANERJEE, Kashi, Moon Township, Pennsylvania 15108 (US); BLUMENSCHEIN, Charles, Pittsburgh, Pennsylvania 15243 (US)
(74) Mandataire: Vidon Brevets & Stratégie
(86) Numéro de dépôt international: PCT/EP2006/067679
(87) Numéro de publication internationale: WO 2007/048773

(56) Documents cités:
- WO-A-88/01608
- WO-A-89/01357
- WO-A-03/020650
- FR-A1- 2 403 306
- FR-A1- 2 547 574
- FR-A1- 2 719 235
- US-A- 3 976 568
- US-A- 4 721 570

## Description

La présente invention concerne le domaine du traitement des eaux.

Plus précisément, l'invention concerne principalement un procédé combinant un traitement biologique à bactéries fixées avec une clarification à flocs lestés, à grande vitesse, des eaux traitées biologiquement.

L'invention peut être utilisée pour le traitement de n'importe quelles eaux contenant des impuretés susceptibles d'être éliminées par un traitement biologique à bactéries fixées demandant une clarification après traitement biologique, telles que, notamment, sans préjudice d'un usage équivalent pour des applications similaires :
- les eaux usées traitées par un lit bactérien, dans lequel les bactéries traitantes sont fixées sur des supports fixes (galets, garnissages plastiques ou minéral) ou en rotation dans l'eau (disques ou tambours en rotation destinée à assurer l'apport d'oxygène nécessaire aux bactéries), dans le but d'enlever les boues excédentaires des eaux traitées biologiquement ;
- les eaux usées ou destinées à l'alimentation humaine traitées par un MBBR (Moving Bed Biological Reactor), dans lequel les bactéries destinées à traiter des pollutions notamment carbonées, ammoniacale ou sous forme de nitrates, sont fixées sur des supports de petite taille unitaire, typiquement entre quelques millimètres et quelques centimètres, de densité proche de celle de l'eau, dans le but d'enlever les boues excédentaires des eaux traitées biologiquement ;
- les eaux usées ou destinées à l'alimentation humaine traitées par biofiltration sur des filtres garnis d'un matériau de gros diamètre, permettant un nettoyage continu des excès de boues biologiques et de filtration, dans lequel les bactéries traitantes (notamment des pollutions carbonées, ammoniacale ou nitrates) sont fixées sur un massif support filtrant constitué de billes, cylindres perles, ou supports similaires dans le but d'enlever les boues excédentaires des eaux traitées biologiquement.

Dans l'état actuel de la technique, les eaux chargées en boues excédentaires produites par un procédé biologique à bactéries fixées fonctionnant en continu, du type lit bactérien ou MBBR, sont usuellement clarifiées dans un clarificateur secondaire classique fonctionnant à des vitesses de l'ordre du mètre par heure (de 0.6 m/h environ à 2 m/h maximum usuellement) entraînant la nécessité de disposer de surfaces importantes pour assurer le travail de clarification nécessaire après le traitement biologique.

Il existe dans l'état de l'art une technique, décrite dans la demande de brevet français FR2719235 publiée le 3 novembre 1995, associant un traitement par boues activées à un traitement de clarification par floculation décantation à floc lesté de sable fin, permettant de réaliser la clarification des eaux à des vitesses superficielles de décantation allant jusqu'à 6m/h et plus. Pour être spécifique, FR2719235 divulgue un procédé de traitement des eaux comprenant une étape de traitement biologique par boues activées ; l'écoulement épuré biologiquement obtenu à l'issue de cette étape contenant, avant son entrée dans l'étape suivante, entre 2 et 6 g/L de biomasse ; une étape de floculation-décantation à flocs lestés ; et la récupération des boues de décantation sans matériau granulaire et leur recyclage, au moins en partie, en amont de la zone de mélange.

Cette technique, qui permet, grâce à l'utilisation de la décantation à flocs lestés, de réaliser la décantation dans des surfaces déjà réduites par un facteur de l'ordre de 3 à 10, présente cependant l'inconvénient de nécessiter l'emploi de boues activées comme mode de traitement biologique.

En effet, les boues activées présentent divers types d'inconvénients.

En premier lieu, les boues activées nécessitent de clarifier l'ensemble de la masse bactérienne traitante, en suspension dans l'eau sortant du bassin de boues activées, et de recirculer l'essentiel des boues de clarification afin de maintenir dans les bassins de boues activées la masse bactérienne nécessaire au traitement, ce qui nécessite usuellement de décanter un débit supérieur de l'ordre de deux fois au débit à traiter, compte tenu d'une recirculation de boues usuellement de l'ordre du débit à traiter, d'où la nécessité d'ouvrages de décantation de tailles importantes ;

En second lieu, les exigences de décantabilité des boues activées nécessitent de limiter la concentration de boues activées dans le bassin à des valeurs de l'ordre de 3 à 6 g de Matière en Suspension (MES) par litre (et ceci même dans le cas de la clarification à flocs lestés objet du brevet FR2719235, sauf à prévoir des taux de recirculation très importants et économiquement irréalistes), ce qui nécessite, compte tenu de la masse biologique nécessaire au traitement d'un flux de pollution donné, de grands volumes de bassin comparé aux volumes nécessaires lorsque la biomasse est fixée ;

Enfin, les grandes concentrations en matière sèche des eaux à décanter (3 à 6 g MES/l) nécessitent l'application de doses de réactif importantes (souvent plus de 1mg/l de polymère de floculation), sur des débits environ doublés, du fait de la recirculation des boues, d'où des consommations de réactifs importantes.

L'objectif principal de la présente invention est de résoudre ces problèmes en proposant un procédé de traitement d'eaux caractérisé en ce qu'il combine successivement au moins une étape de traitement biologique par biomasse fixée d'au moins une partie de la pollution contenu dans lesdites eaux, l'écoulement épuré biologiquement obtenu à l'issue de cette étape contenant, avant son entrée dans l'étape suivante, moins de 2 g/l de MES, et au moins une étape de floculation-décantation à flocs lestés selon laquelle :
on fait passer l'écoulement traité biologiquement dans une zone de mélange, préférentiellement selon un gradient de vitesse compris entre 10 s⁻¹ et 1000 s⁻¹, dans laquelle sont injectés au moins un matériau granulaire insoluble plus dense que l'eau que l'on maintient en suspension, et dans laquelle on laisse au moins une partie des matières en suspension s'agréger autour des particules dudit matériau granulaire,
on fait passer l'écoulement sortant de ladite zone de mélange dans une zone de décantation dans laquelle on sépare une effluent clarifié et des boues de décantation mélangées à du matériau granulaire,
on extrait le matériau granulaire des boues de décantation, et on en recycle l'essentiel dans ladite zone de mélange,
on extrait les boues de décantation séparées du matériau granulaire,
ledit procédé ne comprenant pas d'étape consistant à recycler lesdites boues de décantation séparées du matériau granulaire.

Par rapport à l'état de l'art boues activées, l'invention autorise un traitement biologique compact, du fait des fortes concentrations de biomasse permises par les procédés à biomasse fixée, tout en ne traitant en décantation secondaire qu'un débit approximativement (aux recirculations éventuellement nécessaires au lavage périodique du support de biomasse près) égal au débit à traiter, puisqu'il n'y a pas de nécessité de recirculation de boues, les bactéries nécessaires au traitement étant fixées sur leur support, ce qui diminue la taille des installations de décantation par un premier facteur de réduction.

Selon une variante non couverte par la présente invention, on pourra également prévoir de recycler au moins une partie des boues de décantation séparées du matériau granulaire vers la zone de mélange.

Le procédé selon l'invention permet de plus de traiter en décantation secondaire à des vitesses « au miroir » (débit traité divisé par surface de décantation) importantes, comprises entre 15 m/h et plus de 100 m/h.

Le procédé selon l'invention permet aussi de diminuer les quantités de polymère floculant utilisées, du fait de la plus faible quantité de MES à floculer (seules la biomasse excédentaire est à traiter, soit des concentrations inférieures à 2 g/l, usuellement inférieures même à 1 g/l) et du fait que seul le débit d'eau brute, approximativement, est traité (puisque l'invention ne mets pas en oeuvre de recirculation des boues doublant le débit à traiter).

Préférentiellement, ladite étape de traitement biologique par biomasse fixée est choisie parmi les types de traitements biologiques suivants : lits bactériens, « Moving Bed Biological Reactor » (MBBR), biofiltres, disques biologiques.

Egalement préférentiellement, ladite biomasse est fixée sur un support choisi entre les types suivants : billes, galets, plaques, rubans, anneaux de type pall, raschig ou similaire, disques ou tambours, ces supports pouvant être soit fixes soit mobiles, ou en suspension dans l'eau à traiter.

Avantageusement, la concentration en MES de l'écoulement traité biologiquement obtenu à l'issue de ladite étape de traitement biologique est inférieure à 1g/l.

Egalement avantageusement, le procédé selon l'invention comprend une étape consistant à injecter au moins un réactif floculant dans ladite zone de mélange.

Préférentiellement, le procédé selon l'invention comprend aussi au moins une étape consistant à injecter au moins un réactif coagulant. Ce réactif coagulant pourra être injecté en amont dudit réactif floculant, dans la zone de mélange et/ou en amont de celle-ci et/ou dans toute boucle de recirculation des boues.

Ce réactif coagulant pour se présenter sous forme d'un sel métallique (comme par exemple le chlorure de fer ou le sulfate d'aluminium) ou sous forme d'un coagulant organique (comme les polyDADMAC (polydiallyldimethylammonium chloride)).

Une telle injection de réactif coagulant minéral tel que le chlorure ferrique permet d'abattre la teneur des eaux traitées à des valeurs finales de phosphore résiduel très basses, inférieures au milligramme par litre, et ceci sans gêner la croissance de la biomasse, puisque le phosphore est abattu après le traitement biologique. De plus, dans une variante non couverte par la présente invention, il est possible de recirculer une partie des boues en amont ou dans la zone de mélange afin d'améliorer l'élimination du phosphore et d'optimiser l'utilisation du réactif coagulant injecté, voire diminuer sa consommation.

Enfin, également préférentiellement, le temps de séjour dudit écoulement traité biologiquement dans ladite zone de mélange est compris entre 1 et 10 minutes et est préférentiellement, de moins de 3 minutes.

La présente invention concerne également une installation de traitement biologique des eaux usées spécialement conçue pour la mise en oeuvre du procédé décrit ci-dessus caractérisée en ce qu'elle présente :
- une zone de traitement biologique par biomasse fixée comportant au moins un réacteur de traitement biologique,
- une zone de mélange munie d'au moins une voie principale d'arrivée de l'écoulement traité biologiquement obtenu à la sortie de ladite zone de traitement biologique, d'au moins une voie secondaire d'arrivée connectée à une source de matériau granulaire insoluble dans l'eau et plus dense que l'eau et d'au moins un système d'agitation ;
- une zone de décantation recevant l'écoulement provenant de ladite zone de mélange, et munie d'une voie d'extraction d'effluent clarifié et d'une voie d'extraction du mélange de boues et de matériau granulaire décantés,
- une zone de récupération du matériau granulaire communicant en entrée avec ladite voie d'extraction du mélange de boues et de matériau granulaire décantés, et communicant en sortie avec ladite voie secondaire d'arrivée de matériau granulaire et avec une voie d'extraction de boues en excès,
ladite installation ne comprenant pas des moyens de recyclage desdites boue en excès.

Préférentiellement, ladite zone de traitement biologique est du type lit bactérien, MBBR ou biofiltre.

Selon une variante non couverte par la présente invention, l'installation peut comprendre des moyens de recyclage d'au moins une partie des boues séparées du matériau granulaire vers la zone de mélange.

Egalement préférentiellement, ladite zone de traitement biologique comprend des supports de biomasse choisis parmi les types suivants : billes, galets, plaques, rubans, anneaux de type pall, raschig ou similaire, disques ou tambours.

Avantageusement, ladite zone de mélange comporte au moins une cuve dans laquelle est implantée au moins un moyen d'agitation adapté à maintenir le matériau granulaire en suspension.

Egalement avantageusement, l'installation selon la présente invention comprend des moyens d'injection d'au moins un agent floculant, tel qu'un polymère anionique ou cationique, dans ladite zone de mélange ou dans ladite voie principale d'arrivée dudit écoulement traité biologiquement.

Préférentiellement, ladite installation comprend des moyens d'injection d'au moins un agent coagulant, tels qu'un sel métallique ou un coagulant organique, prévus en amont desdits moyens d'injection dudit agent floculant.

Egalement préférentiellement, ledit matériau granulaire est du sable de dimension comprise entre 40 micromètres et 300 micromètres.

Selon une variante de réalisation de l'invention, ladite zone de décantation est dépourvue de lamelles.

Selon une autre variante, ladite zone de décantation est équipée de lamelles.

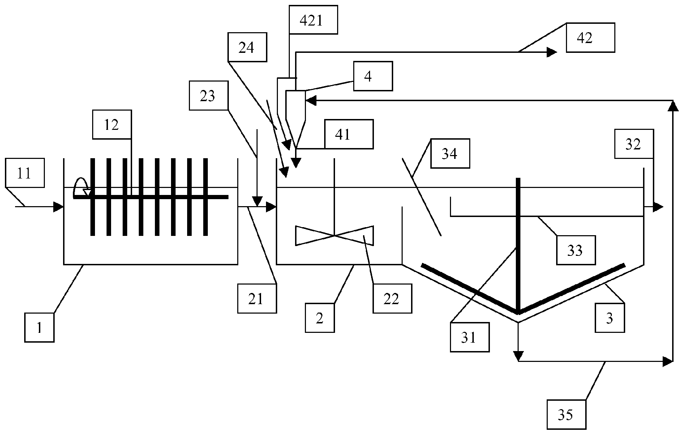

L'invention, ainsi que les différents avantages qu'elle présente seront plus facilement compris grâce à la description qui va suivre d'un mode non limitatif de réalisation de celle-ci donné en référence à la figure unique qui représente schématiquement une installation combinant une étape de traitement biologique par RBC (Rotating Biological Contactors) avec une floculation décantation lestée. Cette figure représente également une variante non couverte par la présente invention.

En référence à cette figure, les eaux à traiter entrent dans cette installation par une arrivée 11 dans une cuve délimitant une zone de traitement biologique 1 à cultures fixées.

Cette cuve est ici représentée équipée de contacteurs biologiques rotatifs réalisés par des disques verticaux montés sur un axe commun horizontal 12 en rotation, servant de support à la biomasse de traitement. On notera toutefois que tout autre mode de support de la biomasse connu de l'homme de l'art peut être utilisé sans sortir du cadre de la présente invention.

L'air nécessaire au traitement biologique est ici amené au contact de la biomasse par la rotation des disques supports.

L'écoulement traité biologiquement dans cette cuve, qui ne contient plus que la biomasse en excès du traitement, soit moins de 1g/l de matières en suspension, passe par un passage 21 dans une cuve délimitant une zone de mélange 2.

Ce passage 21, qui forme une voie principale d'arrivée de l'écoulement traité biologiquement est, dans le cadre du présent mode de réalisation, réduit à une simple ouverture dans une paroi commune séparant la cuve délimitant la zone de traitement biologique 1 de la cuve délimitant la zone de mélange 2.

Cette cuve délimitant la zone de mélange 2 est par ailleurs pourvue d'un agitateur 22 et d'une voie secondaire d'arrivée d'un matériau granulaire constitué par du sable constitué par la sousverse 41 d'un hydrocyclone 4.

Enfin cette cuve est munie de moyens d'injection 24 d'un réactif floculant et de moyens d'injection 23 d'un réactif coagulant, qui peut être un sel de fer ou d'aluminium, par exemple, ou encore un coagulant organique comme le polyDADMAC, prévu en amont de l'injection de réactif floculant.

Il est à noter que le réactif coagulant peut permettre, suivant son type (préférentiellement du chlorure ferrique) et son dosage, d'éliminer les phosphates restant dans les eaux traitées biologiquement.

Les eaux traitées, contenant en suspension des flocs lestés de sable, sont alors dirigées par la chicane 34 vers une zone de décantation 3. Le mélange décanté de boues et de sable est ici repris par un racleur 31, et pompé par une voie d'extraction 35 vers l'hydrocyclone 4. Cet hydrocyclone 4 constitue une zone de récupération du matériau granulaire (sable) dont l'entrée communique avec la voie d'extraction 35 et dont la sortie est constituée par la sousverse 41 formant la voie secondaire de matériau granulaire.

L'ensemble du sable est récupéré en sousverse 41 de l'hydrocyclone 4, et recyclé , tandis que l'ensemble des boues hydrocyclonées est extrait par le circuit 42 vers une zone de traitement ou de stockage des boues (non représentée). Dans une variante non couverte par la présente invention, au moins une partie des boues séparées du matériau granulaire peut toutefois être recyclée dans la zone de mélange 2 grâce à des moyens 421.

L'eau clarifiée est évacuée de la zone de décantation 3 en surface de celle-ci par une voie d'extraction 32 intégrant des goulottes 33.

L'installation décrite a été mise en oeuvre pour traiter des eaux municipales. Le sable utilisé présentait un diamètre effectif de 130 micromètres et une densité réelle de 2.65 . En tant que coagulant, on a utilisé du chlorure ferrique à raison de 50mg FeCl₃/l. Le floculant utilisé était un floculant anionique à raison de 1.5 mg/l. Un taux de recirculation du mélange sable/boue vers l'hydrocyclone de 8 % a été mis en oeuvre avec un taux de sable en recirculation de 5 kg/m³ d'effluent sortant de la zone de traitement biologique 1.

Une vitesse de décantation au miroir, dans la zone de décantation, de 30m/h a concomitamment été mise en oeuvre

L'écoulement obtenu à la sortie de la cuve délimitant la zone de traitement biologique 1 obtenu contenait moins de 600mgMES/l. La mise en oeuvre de cette installation a permis d'obtenir une eau traitée présentant moins de 20mg MES/l.

Une perte en sable très faible, de moins de 3 grammes de sable par mètre cube d'eau traitée a été obtenue.

Le mode de réalisation de l'invention ici décrit n'a pas pour objet de réduire la portée de celle-ci.

## Revendications

1. Procédé de traitement d'eaux **caractérisé en ce qu'**il combine successivement au moins une étape de traitement biologique par biomasse fixée d'au moins une partie de la pollution contenue dans lesdites eaux, l'écoulement épuré biologiquement obtenu à l'issue de cette étape contenant, avant son entrée dans l'étape suivante, moins de 2 g/l de MES, et au moins une étape de floculation-décantation à flocs lestés selon laquelle :
- on fait passer l'écoulement traité biologiquement dans une zone de mélange, préférentiellement selon un gradient de vitesse compris entre 10 s⁻¹ et 1000 s⁻¹, dans laquelle sont injectés au moins un matériau granulaire insoluble plus dense que l'eau que l'on maintient en suspension, et dans laquelle on laisse au moins une partie des matières en suspension s'agréger autour des particules dudit matériau granulaire,
- on fait passer l'écoulement sortant de ladite zone de mélange dans une zone de décantation dans laquelle on sépare une effluent clarifié et des boues de décantation mélangées à du matériau granulaire,
- on extrait le matériau granulaire des boues de décantation, et on en recycle l'essentiel dans ladite zone de mélange,
- on extrait les boues de décantation séparées du matériau granulaire,
ledit procédé ne comprenant pas d'étape consistant à recycler lesdites boues de décantation séparées du matériau granulaire.

2. Procédé selon la revendication 1 **caractérisé en ce que** ladite étape de traitement biologique par biomasse fixée est choisie parmi les types de traitements biologiques suivants: lits bactériens, «Mobile Bed Bio Reactor » (MBBR), biofiltres, disques biologiques.

3. Procédé suivant l'une des revendications 1 à 2 **caractérisé en ce que** ladite biomasse est fixée sur un support choisi entre les types suivants : billes, galets, plaques, rubans, anneaux de type pall, raschig ou similaire, disques ou tambours, ces supports pouvant être soit fixes soit mobiles, ou en suspension dans l'eau à traiter.

4. Procédé selon l'une quelconque des revendications 1 à 3 **caractérisé en ce que** la concentration en MES de l'écoulement traité biologiquement obtenu à l'issue de ladite étape de traitement biologique est inférieure à 1g/l.

5. Procédé selon l'une quelconque des revendications 1 à 4, **caractérisé en ce qu'**il comprend une étape consistant à injecter au moins un réactif floculant dans ladite zone de mélange.

6. Procédé selon la revendication 5, **caractérisé en ce qu'**il comprend au moins une étape consistant à injecter au moins un réactif coagulant en amont dudit réactif floculant.

7. Procédé suivant l'une quelconque des revendications 1 à 6, **caractérisé en ce que** le temps de séjour dudit écoulement traité biologiquement dans ladite zone de mélange est compris entre 1 et 10 minutes et est préférentiellement, de moins de 3 minutes.

8. Installation de traitement des eaux pour la mise en oeuvre du procédé selon l'une quelconque des revendications 1 à 7 **caractérisée en ce qu'**elle présente:
- une zone de traitement biologique (1) par biomasse fixée comportant au moins un réacteur de traitement biologique,
- une zone de mélange (2), comportant une ou plusieurs cuves, munie d'au moins une voie principale d'arrivée (21) de l'écoulement traité biologiquement obtenu à la sortie de ladite zone de traitement biologique (1), d'au moins une voie secondaire d'arrivée (41) connectée à une source de matériau granulaire insoluble dans l'eau et plus dense que l'eau et d'au moins un système d'agitation (22) ;
- une zone de décantation (3) recevant l'écoulement provenant de ladite zone de mélange, et munie d'une voie d'extraction d'effluent clarifié (32) et d'une voie d'extraction (35) du mélange de boues et de matériau granulaire décantés, et
- une zone de récupération (4) du matériau granulaire communicant en entrée avec ladite voie d'extraction (35) du mélange de boues et de matériau granulaire décantés, et communicant en sortie avec ladite voie secondaire d'arrivée (41) de matériau granulaire et avec une voie d'extraction (42) de boues en excès,
ladite installation ne comprenant pas de moyen de recyclage desdites boues en excès.

9. Installation selon la revendication 8, **caractérisée en ce que** ladite zone de traitement biologique (1) est du type lit bactérien, MBBR ou biofiltre.

10. Installation selon la revendication 9, **caractérisée en ce que** ladite zone de traitement biologique (1) comprend des supports de biomasse choisis parmi les types suivants : billes, galets, plaques, rubans, anneaux de type pall, raschig ou similaire, disques ou tambours.

11. Installation selon l'une quelconque des revendications 8 à 10, **caractérisée en ce que** ladite zone de mélange (2) comporte au moins une cuve dans laquelle est implantée au moins un moyen d'agitation (22) adapté à maintenir le matériau granulaire en suspension.

12. Installation selon l'une quelconque des revendications 8 à 11, **caractérisée en ce qu'**elle comprend des moyens d'injection (24) d'au moins un agent floculant, tel qu'un polymère anionique ou cationique, dans ladite zone de mélange ou dans ladite voie principale d'arrivée dudit écoulement traité biologiquement.

13. Installation selon la revendication 12, **caractérisée en ce qu'**elle comprend des moyens d'injection (23) d'au moins un agent coagulant, tels qu'un sel métallique ou un coagulant organique, prévus en amont desdits moyens d'injection dudit agent floculant.

14. Installation selon l'une quelconque des revendications 8 à 13, **caractérisée en ce que** ledit matériau granulaire est du sable de dimension comprise entre 40 micromètres et 300 micromètres.

15. Installation de traitement d'eau suivant l'une quelconque des revendications 8 à 14, **caractérisée en ce que** ladite zone de décantation est dépourvue de lamelles.

16. Installation de traitement d'eau suivant l'une quelconque des revendications 8 à 14, **caractérisée en ce que** ladite zone de décantation (3) est équipée de lamelles.

## Patentansprüche

1. Wasserbehandlungsverfahren, **dadurch gekennzeichnet, dass** es nacheinander mindestens einen biologischen Behandlungsschritt durch fixierte Biomasse mindestens eines Teils der in den Wässern enthaltenen Verschmutzung, wobei der nach diesem Schritt erhaltene biologisch gereinigte Abfluss vor seinem Eintritt in den folgenden Schritt weniger als 2 g/l MES enthält, und mindestens einen Flockungs-/Dekantierungsschritt mit ballastierten Flocken kombiniert, wobei:
- der biologisch behandelte Abfluss in eine Mischzone vorzugsweise mit einem Geschwindigkeitsgradienten zwischen 10 s⁻¹ und 1000 s⁻¹ eingeleitet wird, in die mindestens ein unlösliches Granulatmaterial dichter als das Wasser, das in Suspension gehalten wird, eingeleitet wird, und in der mindestens ein Teil der Materialien in Suspension um die Partikel des Granulatmaterials zum Aggregieren gebracht werden,
- der aus der Mischzone austretende Abfluss in eine Dekantierungszone eingeleitet wird, in der ein geklärtes Abwasser und Klärschlämme, die mit Granulatmaterial gemischt sind, abgeschieden werden,
- das Granulatmaterial aus den Klärschlämmen extrahiert wird, und der Kern in der Mischzone rezykliert wird,
- die von dem Granulatmaterial abgeschiedenen Klärschlämme extrahiert werden,
wobei das Verfahren keinen Schritt umfasst, der darin besteht, die von dem Granulatmaterial abgeschiedenen Klärschlämme zu rezyklieren.

2. Verfahren nach Anspruch 1, **dadurch gekennzeichnet, dass** der biologische Behandlungsschritt durch fixierte Biomasse unter den folgenden biologischen Behandlungstypen ausgewählt ist: Tropfkörper, "Mobile Bed Bio Reactor" (MBBR), Biofilter, Scheibentropfkörper.

3. Verfahren nach einem der Ansprüche 1 bis 2, **dadurch gekennzeichnet, dass** die Biomasse auf einem Träger fixiert ist, der unter den folgenden Typen ausgewählt ist: Kugeln, Rollen, Platten, Bänder, Pall-, Raschig-Ringe oder dergleichen, Scheiben oder Trommeln, wobei diese Träger fest oder beweglich oder in dem zu behandelnden Wasser in Suspension sein können.

4. Verfahren nach einem der Ansprüche 1 bis 3, **dadurch gekennzeichnet, dass** die MES-Konzentration des biologisch behandelten Abflusses, der nach dem biologischen Behandlungsschritt erhalten wird, unter 1 g/l beträgt.

5. Verfahren nach einem der Ansprüche 1 bis 4, **dadurch gekennzeichnet, dass** es einen Schritt umfasst, der darin besteht, mindestens ein Flockungsreagens in die Mischzone einzuleiten.

6. Verfahren nach Anspruch 5, **dadurch gekennzeichnet, dass** es mindestens einen Schritt umfasst, der darin besteht, mindestens ein Koagulationsreagens stromaufwärts zu dem Flockungsreagens einzuleiten.

7. Verfahren nach einem der Ansprüche 1 bis 6, **dadurch gekennzeichnet, dass** die Aufenthaltszeit des biologisch behandelten Abflusses in der Mischzone zwischen 1 und 10 Minuten und vorzugsweise mindestens 3 Minuten beträgt.

8. Wasserbehandlungsanlage für den Einsatz des Verfahrens nach einem der Ansprüche 1 bis 7, **dadurch gekennzeichnet, dass** sie umfasst:
- eine Zone zur biologischen Behandlung (1) durch fixierte Biomasse, umfassend mindestens einen biologischen Behandlungsreaktor,
- eine Mischzone (2), umfassend eine oder mehrere Wannen, die mit mindestens einem Hauptzuleitungsweg (21) des biologisch behandelten Abflusses, der am Ausgang der biologischen Behandlungszone (1) erhalten wird, mit mindestens einem zweiten Zuleitungsweg (41), der an eine Quelle von Granulatmaterial, das in dem Wasser unlöslich und dichter als das Wasser ist, angeschlossen ist, und mindestens einem Bewegungssystem (22) versehen ist;
- eine Dekantierungszone (3), die den von der Mischzone kommenden Abfluss aufnimmt und mit einem Weg zur Extraktion von geklärtem Abwasser (32) und einem Weg zur Extraktion (35) des Gemisches von dekantierten Schlämmen und Granulatmaterial versehen ist; und
- eine Wiedergewinnungszone (4) des Granulatmaterials, die am Eingang mit dem Weg zur Extraktion (35) des Gemisches von dekantierten Schlämmen und Granulatmaterial in Verbindung steht, und am Ausgang mit dem zweiten Zuleitungsweg (41) von Granulatmaterial und mit einem Weg zur Extraktion (42) von überschüssigen Schlämmen in Verbindung steht,
wobei die Anlage kein Mittel zum Rezyklieren der überschüssigen Schlämme umfasst.

9. Anlage nach Anspruch 8, **dadurch gekennzeichnet, dass** die biologische Behandlungszone (1) vom Typ Tropfkörper, MBBR oder Biofilter ist.

10. Anlage nach Anspruch 9, **dadurch gekennzeichnet, dass** die biologische Behandlungszone (1) Biomasseträger umfasst, die unter den folgenden Typen ausgewählt sind: Kugeln, Rollen, Platten, Bänder, Pall-, Raschig-Ringe oder dergleichen, Scheiben oder Trommeln.

11. Anlage nach einem der Ansprüche 8 bis 10, **dadurch gekennzeichnet, dass** die Mischzone (2) mindestens eine Wanne umfasst, in der mindestens ein Bewegungsmittel (22) vorgesehen ist, das geeignet ist, das Granulatmaterial in Suspension zu halten.

12. Anlage nach einem der Ansprüche 8 bis 11, **dadurch gekennzeichnet, dass** sie Mittel (24) zum Einleiten mindestens eines Flockungsmittels, wie eines anionischen oder kationischen Polymers, in die Mischzone oder in den Hauptzuleitungsweg des biologisch behandelten Abflusses umfasst.

13. Anlage nach Anspruch 12, **dadurch gekennzeichnet, dass** sie Mittel (23) zum Einleiten mindestens eines Koagulationsmittels, wie eines Metallsalzes oder eines organischen Koagulationsmittels, umfasst, die stromaufwärts zu den Einleitungsmitteln des Flockungsmittels vorgesehen sind.

14. Anlage nach einem der Ansprüche 8 bis 13, **dadurch gekennzeichnet, dass** das Granulatmaterial Sand mit einer Abmessung zwischen 40 Mikrometer und 300 Mikrometer ist.

15. Wasserbehandlungsanlage nach einem der Ansprüche 8 bis 14, **dadurch gekennzeichnet, dass** die Dekantierungszone keine Lamellen aufweist.

16. Wasserbehandlungsanlage nach einem der Ansprüche 8 bis 14, **dadurch gekennzeichnet, dass** die Dekantierungszone (3) mit Lamellen versehen ist.

## Claims

1. Water treatment process **characterised in that** it comprises in sequence at least one fixed biomass biological treatment step of at least part of the pollution contained in said water, the biologically purified flow obtained at the output from this step containing less than 2 g/l of SS before it is input into the next step, and at least one flocculation-settlement step with ballasted flocs according to which:
- the biologically treated flow is transferred into a mixing zone, preferably at a velocity gradient of between 10 s⁻¹ and 1000 s⁻¹, in which at least one insoluble granular material denser than water is injected and is held in suspension and in which at least part of the suspended solids are left to aggregate around the particles of said granular material,
- the flow output from said mixing zone is transferred into a settlement zone in which a clarified effluent is separated from the settlement sludge mixed with granular material,
- the granular material is extracted from the settlement sludge, and most of it is recycled in said mixing zone,
- the settlement sludge separated from the granular material is extracted,
wherein said process does not include a step consisting of recycling said settlement sludge separated from the granular material.

2. Process set forth in either claim 1, **characterised in that** said biological treatment step by fixed biomass is chosen from among the following biological treatment types: bacterial beds, « Moving Bed Biological Reactors » (MBBRs), biofilters, biological disks.

3. Process set forth in one of claims 1 to 2, **characterised in that** said biomass is fixed to a support chosen from among the following types - balls, rollers, plates, ribbons, pall, raschig or similar type rings, disks or drums, these supports being fixed or mobile, or in suspension in the water to be treated.

4. Process set forth in any one of claims 1 to 3, **characterised in that** the concentration of SS in the biologically treated flow obtained at the output from the first biological treatment step is less than 1g/l.

5. Process set forth in any one of claims 1 to 4, **characterised in that** it comprises a step consisting of injecting at least one flocculating reagent into said mixing zone.

6. Process set forth in claim 5, **characterised in that** it comprises at least one step consisting of injecting at least one coagulating reagent on the input side of said flocculating reagent.

7. Process set forth in any one of claims 1 to 6, **characterised in that** the residence time of said biologically treated flow in said mixing zone is between 1 and 10 minutes and is preferably less than 3 minutes.

8. Biological treatment installation for waste water for implementation of the process set forth in any one of claims 1 to 7, **characterised in that** it includes:
- a fixed biomass biological treatment zone (1) comprising at least one biological treatment reactor,
- a mixing zone (2) comprising one or several tanks, provided with at least one biologically treated main flow arrival channel (21) obtained at the output from said biological treatment zone (1), at least one secondary arrival channel (41) connected to a source of granular material insoluble in water and denser than water, and at least one stirring system (22);
- a settlement zone (3) receiving the flow originating from said mixing zone and provided with a clarified effluent extraction channel (32) and an extraction channel (35) for the mix of settled sludge and granular material,and
- a granular material recovery zone (4) communicating at the inlet with said extraction channel (35) for extraction of the mix of settled sludge and granular material, and communicating at the outlet with said secondary granular material inlet channel (41) and with an excess sludge extraction channel (42),
wherein said installation does not include means of recycling said excess sludge.

9. Installation set forth in claim 8, **characterised in that** said biological treatment zone (1) is of the bacterial bed, MBBR or biofilter type.

10. Installation set forth in claim 9, **characterised in that** said biological treatment zone (1) comprises biomass supports chosen from among the following types: balls, rollers, plates, ribbons, pall, raschig or similar type rings, disks or drums.

11. Installation set forth in any one of claims 8 to 10, **characterised in that** said mixing zone (2) comprises at least one tank in which at least one stirring means (22) is located capable of keeping the granular material in suspension.

12. Installation set forth in any one of claims 8 to 11, **characterised in that** it comprises means of injection (24) of at least one flocculating agent such as an ionic or cationic polymer, into said mixing zone or into said main inlet channel for said biologically treated flow.

13. Installation set forth in claim 12, **characterised in that** it comprises means (23) of injection of at least one coagulating agent such as a metallic salt or an organic coagulant, provided on the input side of said means of injection of said flocculating agent.

14. Installation set forth in any one of claims 8 to 13, **characterised in that** said granular material is sand with dimensions between 40 micrometers and 300 micrometers.

15. Installation for the treatment of water set forth in any one of claims 8 to 14, **characterised in that** said settlement zone does not have any lamella.

16. Installation for the treatment of water set forth in any one of claims 8 to 14, **characterised in that** said settlement zone (3) does have lamella.
